# EUROPÄISCHE PATENTSCHRIFT

(11) **EP 3 011 379 B1**
(45) Veröffentlichungstag und Bekanntmachung des Hinweises auf die Patenterteilung: **18.08.2021**
(21) Anmeldenummer: 14733586.3
(22) Anmeldetag: 18.06.2014
(51) Int. Cl.: G02B 21/00, G02B 21/34, G02B 21/36

(54) **VERFAHREN UND OPTISCHE VORRICHTUNG ZUM MIKROSKOPISCHEN UNTERSUCHEN EINER VIELZAHL VON PROBEN**
METHOD AND OPTICAL DEVICE FOR MICROSCOPICALLY EXAMINING A MULTIPLICITY OF SPECIMENS
PROCÉDÉ ET DISPOSITIF OPTIQUE D'EXAMEN AU MICROSCOPE D'UNE PLURALITÉ D'ÉCHANTILLONS

(30) Priorität: 18.06.2013 DE 102013211426
(43) Veröffentlichungstag der Anmeldung: 27.04.2016
(73) Patentinhaber: Leica Microsystems CMS GmbH, 35578 Wetzlar (DE)
(72) Erfinder: KNEBEL, Werner, 76709 Kronau (DE); FOUQUET, Wernher, 68167 Mannheim (DE); SIECKMANN, Frank, 75031 Eppingen (DE)
(74) Vertreter: Bradl, Joachim
(86) Internationale Anmeldenummer: PCT/EP2014/062907
(87) Internationale Veröffentlichungsnummer: WO 2014/202704

(56) Entgegenhaltungen:
- EP-A1- 2 587 295
- EP-A2- 0 350 189
- WO-A1-2007/065711
- WO-A2-2012/122027
- None

## Beschreibung

Die Erfindung betrifft ein Verfahren zum mikroskopischen Untersuchen einer Vielzahl von Proben.

Die Erfindung betrifft außerdem eine optische Vorrichtung, zum mikroskopischen Untersuchen einer Vielzahl von Proben, mit einem Probenhalter, der eine Vielzahl von Proben hält und der, insbesondere motorisch und/oder automatisch, relativ zu einer Probenbeleuchtungsposition derart bewegbar gelagert ist, dass sukzessive jeweils zumindest eine der Proben in der Probenbeleuchtungsposition positionierbar ist.

Es besteht bei einigen Anwendungen, beispielsweise für besondere Reihenuntersuchungen oder statistische Untersuchungen, das Bedürfnis, schnell und vorzugsweise automatisch eine Vielzahl von Proben nacheinander mikroskopisch zu untersuchen. Beispielsweise ist aus DE 199 50 225 A1 eine besondere Anordnung bekannt, um eine große Anzahl von spezifischen Nachweisregionen, die gitterförmig auf einem Träger von bis zu 22 x 60 mm verteilt sind, mit einem konfokalen Scanmikroskop, abtasten zu können. Das Problem, dass der Träger wesentlich größer ist, als das Objektfeld eines üblichen Scanmikroskops wird gemäß der Lehre dieser Druckschrift mithilfe eines in einer zum Träger parallelen Ebene schwenkbaren Armes gelöst, der einen Teil der optischen Komponenten trägt.

Eine solche Lösung ist nicht nur sehr aufwändig, sie hat auch den Nachteil, dass ein dreidimensionales Abbilden einer Vielzahl von Proben nach wie vor sehr lange dauern würde, was insbesondere bei den zumeist lebensdauerbegrenzten, lichtempfindlichen Proben nicht akzeptabel ist.

Viele mikroskopisch zu untersuchende Proben weisen eine begrenzte Lebensdauer auf. Dieser Umstand ist u.a. oft durch ihre Lichtempfindlichkeit begründet. Insoweit ist eine dreidimensionale Abtastung von beispielsweise matrixförmig auf einem Probenträger angeordneten Proben, beispielsweise mit einem Scanmikroskop, in der Praxis problematisch, weil der Scanvorgang viel Zeit in Anspruch nimmt und während des Scanvorganges jeweils auch Probenbereiche mit Beleuchtungslicht beaufschlagt und dadurch geschädigt werden, die außerhalb des gerade relevanten Rasterpunktes liegen.

Eine ganz andere Technik, bei der eine schichtweise Beleuchtung der Probe erfolgt, erlaubt zwar grundsätzlich eine schnellere und probenschonendere Erfassung von Bilddaten, ist jedoch bislang nicht für schnelle Massenuntersuchungen von Proben geeignet, weil die erforderlichen optischen Vorrichtungen technisch sehr aufwändig sind und weil die Proben einzeln und individuell in besonderen Vorrichtungen angeordnet und die Beobachtungsvorrichtung aufwändig jeweils individuell für jede Probe eingerichtet werden muss. Dieses Verfahren ist insbesondere unter der Bezeichnung SPIM (Single Plane Illumination Microscopy) bekannt.

Ein nach dem SPIM-Verfahren arbeitendes Mikroskop ist in DE 102 57 423 A1 beschrieben. Bei diesem Mikroskop wird eine Probe mit einem dünnen Lichtstreifen beleuchtet, während die Beobachtung senkrecht zu der Ebene des beleuchtenden Lichtstreifens erfolgt. Hierbei erfolgen die Beleuchtung und die Detektion über zwei separate optische Strahlengänge mit jeweils separater Optik, insbesondere mit zwei separaten, zueinander senkrechten Objektiven. Der Lichtstreifen wird von einem Beleuchtungsobjektiv und einer ihm vorgeschalteten Zylinderoptik erzeugt. Für die Bildaufnahme wird die Probe durch den bezüglich des Detektors feststehenden Lichtstreifen bewegt, um schichtweise Fluoreszenz- und/oder Streulicht mit einem flächigen Detektor aufzunehmen. Die so gewonnenen Schichtbilddaten lassen sich anschließend zu einem aus einer dreidimensionalen Abbildung der Probe entsprechenden Datensatz zusammensetzen.

Insbesondere kann diese Methode in aller Regel nicht mit Vorrichtungen ausgeführt werden, die einen klassischen Mikroskopaufbau mit einem Standard-Mikroskopstativ aufweisen. Vielmehr sind zur Ausführung dieser Techniken aufwändige und komplizierte Spezialanordnungen nötig.

Aus DE 10 2004 034 957 A1 ist eine Anordnung zur mikroskopischen Beobachtung einer Probe über ein Mikroskopobjektiv bekannt, in dessen Gehäuse außerhalb der Linsenoptik Lichtführungen für das Beleuchtungslicht der Probe vorgesehen sind. Das Beleuchtungslicht verläuft dabei zunächst parallel zur optischen Achse des Objektivs innerhalb der Lichtführung und trifft danach auf einen am Objektivgehäuse angebrachten, ringförmigen Reflektor mit geringer Apertur, die das Beleuchtungslicht mit Hilfe zusätzlicher Abbildungselemente senkrecht zur optischen Achse des Mikroskopobjektivs und damit senkrecht zur Beobachtungsrichtung in die Probe fokussieren. Auch hier erfolgt die Beleuchtung der Probe flächenartig nach dem SPIM-Prinzip. Bei dieser Ausführung ist insbesondere problematisch, die Probe innerhalb des ringförmigen Refelektors zu positionieren. Eine solche Vorrichtung ist zur Anwendung eines automatisierten Verfahrens für eine Reihenuntersuchung einer Vielzahl von Proben daher ungeeignet.

Insbesondere zur Untersuchung von aquatischen Organismen ist es auch bekannt, die Proben nicht mit einem Probenhalter zu halten, sondern durch eine Glaskapillare zu saugen, die mit einem Lichtblatt durchleuchtet wird. Eine solche Vorgehensweise ist beispielsweise aus dem Artikel von Burns et al., "Preparation strategy and illumination of three-dimensional cell cultures in light sheet-based fluorescence microscopy", Journal of Biomedical Optics, Vol. 17(19), 101518 (Oct. 2012) bekannt. Eine solche Vorgehensweise ist zum strukturierten, systematischen und gezielten mikroskopischen Untersuchen einer Vielzahl von Proben ungeeignet. Auch in dem Artikel von Yanik et al., "Technologies for Micromanipulating, Imaging, and Phenotyping Small Invertebrates and Vertebrates", Annu. Rev. Biomed. Eng. 2011; 13: 185-217, ist ein Verfahren bekannt, bei dem die Proben durch eine Kapillare gepumpt werden.

Ein Mikroskop zur Untersuchung von Proben ist aus der EP2587295A1 bekannt.

Es ist daher die Aufgabe der vorliegenden Erfindung, ein Verfahren anzugeben, das es ermöglicht, probenschonend, effizient, präzise und vorzugsweise automatisiert eine mikroskopische Untersuchung einer Vielzahl von Proben vorzunehmen.

Die Aufgabe wird durch ein Verfahren nach Anspruch 1 gelöst.

Es ist außerdem eine Aufgabe der vorliegenden Erfindung, eine Vorrichtung anzugeben, die es ermöglicht, probenschonend, effizient, präzise und vorzugsweise automatisiert eine mikroskopische Untersuchung einer Vielzahl von Proben vorzunehmen.

Diese Aufgabe wird durch ein Mikroskop nach Anspruch 15 gelöst.

Durch die Erfindung ist es ermöglicht, bei hohem Bildkontrast und niedriger Phototoxizität eine Massenuntersuchung von lichtempfindlichen Proben, wie beispielsweise lebenden Zellverbänden, wie zum Beispiel Gewebekulturen von Hautzellen und Embryonalentwicklung von Wirbeltieren, vorzunehmen. Hierbei ist auch ein hoher Durchsatz von Proben pro Zeiteinheit ermöglicht, ohne dass Einbußen hinsichtlich der vorgenannten Parameter hingenommen werden müssen. Insbesondere ermöglicht die vorliegende Erfindung in vorteilhafter Weise eine automatisierte Massenuntersuchung von Proben vornehmen zu können, was insbesondere durch die erfindungsgemäße Ausnutzung der SPIM-Technologie in Verbindung mit der erfindungsgemäßen Anordnung und Verwendung des Probenhalters und der besonderen Strahlführung relativ zu den Proben unterstützt wird.

Beispielsweise können die Proben mit dem Probenhalter in Matrixform und/oder in einer gemeinsamen Ebene gehalten sein. Eine solche Probenanordnung ermöglicht ein schnelles und präzises, sukzessives Wechseln der Proben in die Probenbeleuchtungsposition durch einfache Verschiebebewegungen.

Alternativ oder zusätzlich kann auch vorgesehen sein, dass die Proben mit dem Probenhalter in wenigstens einer geraden Reihe gehalten sind. Bei einer solchen Ausführung reicht eine Verschiebebewegung entlang einer einzigen Richtung, die Proben sukzessive in die Probenbeleuchtungsposition zu verbringen.

Alternativ können die Proben mit dem Probenhalter in einer gebogenen Reihe, insbesondere in einer ringförmigen Reihe gehalten sein. Insbesondere kann vorgesehen sein, dass der Probenhalter als Revolver ausgebildet ist. Bei diesen Ausführungen können die Proben sukzessive jeweils durch Ausführung einer Drehbewegung in die Probenbeleuchtungsposition verbracht werden.

Erfindungsgemäß sind eine oder mehrere der Proben in wenigstens einem Subhalter des Probenhalters gehaltert. Insbesondere kann vorgesehen sein, dass der Probenhalter mehrere, insbesondere strangförmige, Subhalter aufweist. Der Subhalter bzw. die Subhalter kann/können vorteilhaft in einem, insbesondere oben offenen Gefäß, angeordnet sein, das mit einer Immersionsflüssigkeit gefüllt ist; dies insbesondere derart, dass die Proben und/oder der Subhalter, vorzugsweise vollständig, in der Immersionsflüssigkeit untergetaucht sind. Bei der Untersuchung der Proben kann ein Detektionsobjektiv, das insbesondere auch das Umlenkmittel tragen kann, in die Immersionsflüssigkeit eintauchen oder wenigstens mit der Frontlinse in die Immersionsflüssigkeit eingetaucht sein. Vorzugsweise sind während des Untersuchungsvorganges auch das Umlenkmittel, beispielsweise einer oder mehrere Umlenkspiegel, in die Immersionsflüssigkeit eingetaucht.

Insbesondere kann vorgesehen sein, dass der Probenhalter wenigstens, einen strangförmigen Subhalter aufweist, mit denen jeweils mindestens eine Probe, insbesondere jeweils eine Reihe von Proben, gehaltert ist. Eine solche Ausführung hat den Vorteil, dass sich das Umlenkmittel während des sukzessiven Verbringens der Proben in die Probenbeleuchtungsposition seitlich an dem Subhalter entlang bewegt und/oder sich der strangförmige Subhalter in einer Linearbewegung an dem Umlenkmittel, beispielsweise einem Umlenkspiegel, vorbei bewegt. Insbesondere kann vorteilhaft auch vorgesehen sein, dass der strangförmige Subhalter während des sukzessiven Verbringens der Proben in die Probenbeleuchtungsposition zwischen zwei einander gegenüberliegend angeordneten Umlenkmitteln, beispielsweise Umlenkspiegeln, hindurch bewegt wird.

Bei einer besonderen Ausführung weist der Probenhalter mehrere strangförmige Subhalter auf, mit denen jeweils mindestens eine Probe, insbesondere jeweils eine Reihe von Proben, gehaltert ist. Alternativ oder zusätzlich kann vorgesehen sein, dass der Probenhalter mehrere strangförmige Subhalter aufweist, die in einer gemeinsamen Ebene und/oder parallel zueinander ausgerichtet sind und/oder dass der Probenhalter mehrere würfelförmige Subhalter aufweist, mit denen jeweils mindestens eine der Proben gehaltert ist.

Bei einer anderen Ausführung weist der Probenhalter als Schalen ausgebildete Subhalter auf, in denen jeweils mindestens eine Probe angeordnet ist. Es kann auch vorgesehen sein, dass der Probenhalter eine, insbesondere zylinderförmige, Röhre aufweist, in der wenigstens eine der Proben gehalten ist oder in der mehrere der Proben angeordnet, insbesondere aufgereiht, sind. Auch eine solche Ausführung ermöglicht ein schnelles und präzises Verbringen der einzelnen Proben in die Probenbeleuchtungsposition.

Bei einer besonderen Ausführung ist die Probenbeleuchtungsposition außerhalb des Beleuchtungsobjektivs, jedoch in Verlängerung der optischen Achse des Beleuchtungsobjektivs angeordnet. Auf diese Weise ist es ermöglicht, jeweils mindestens eine Probe präzise, effizient und bauraumsparend beleuchten zu können. Darüber hinaus ermöglicht eine solche Anordnung eine mechanisch besonders robuste Ausführung. Dies insbesondere, weil lange Trägerarme zum halten optischer Bauteile, die in störender Weise in Schwingung geraten können, vermieden sind. Insbesondere hierbei kann vorteilhaft vorgesehen sein, dass das Beleuchtungslicht außermittig durch das Beleuchtungsobjektiv geführt wird.

Bei einer besonders vorteilhaften Ausführung weist wenigstens ein Subhalter ein, vorzugsweise durchsichtiges, Einbettungsmedium, insbesondere Agarose oder ein - vorzugsweise ähnliches - gelartiges, durchsichtiges Medium und/oder eine ähnliche, galertartige, durchsichtige Matrix, auf, in das die von dem Subhalter gehaltene Probe eingebettet ist oder die von dem Subhalter gehaltenen Proben eingebettet sind. Eine solche Ausführung hat den besonderen Vorteil, dass die jeweilige Probe ohne Abschattung durch undurchsichtige Haltebauteile beobachtet werden kann. Darüber hinaus kann durch ein Einbettungsmedium eine zum Erhalt der Proben günstige und schützende Umgebung geschaffen werden.

Bei einer besonderen Ausführung ist vorgesehen, dass die Proben, die bereits untersucht wurden und bereits aus der Probenbeleuchtungsposition entfernt wurden, insbesondere automatisch, aus dem Probenhalter entnommen werden. Insbesondere kann zusätzlich vorgesehen sein, dass, insbesondere automatisch, weitere zu untersuchende Proben an den Probenhalter, insbesondere an freigewordene Positionen des Probenhalters, übergeben werden. Auf diese Weise ist vorteilhaft ein kontinuierlicher Untersuchungsprozess möglich, bei dem sukzessive, endlos und unterbrechungsfrei Proben untersucht werden können.

Wie bereits erwähnt kann beispielsweise vorgesehen sein, dass der Probenhalter gedreht wird, um jeweils die nächste zu untersuchende Probe in der Beleuchtungsposition zu positionieren. Insbesondere kann vorgesehen sein, dass der Probenhalter um die optische Achse des Beleuchtungsobjektivs oder um eines zur optischen Achse des Beleuchtungsobjektivs parallele Achse gedreht wird, um jeweils die nächste zu untersuchende Probe in der Beleuchtungsposition zu positionieren. Eine solche Vorgehensweise bietet sich vorteilhaft insbesondere dann an, wenn die Proben in dem Probenhalter ringförmig angeordnet sind.

Alternativ oder zusätzlich kann vorgesehen sein, dass der Probenhalter relativ zur Beleuchtungsposition in wenigstens einer Richtung linear verschoben wird, um jeweils die nächste zu untersuchende Probe in der Beleuchtungsposition zu positionieren und/oder dass eine Verschiebevorrichtung vorhanden ist, mit der der Probenhalter, insbesondere automatisch, in zwei verschiedene, insbesondere zueinander orthogonale, Richtungen verschiebbar ist und/oder dass eine Verschiebevorrichtung vorhanden ist, mit der der Probenhalter, insbesondere automatisch, in drei verschiedene, insbesondere zueinander orthogonale, Richtungen verschiebbar ist.

Bei einer besonderen Ausführung sind das Umlenkmittel und die in der Beleuchtungsposition befindliche Probe in einer gemeinsamen Ebene angeordnet, wobei das Umlenkmittel innerhalb dieser Ebene die in der Beleuchtungsposition befindliche Probe nur unvollständig, insbesondere nur einseitig oder auf zwei gegenüberliegenden Seiten, umgibt. Vorzugsweise bleibt wenigstens ein Bereich innerhalb der genannten Ebene frei, durch den Proben in die Probenbeleuchtungsposition verbracht und aus dieser entfernt werden können. Eine solche Ausführung hat den besonderen Vorteil, dass die Proben mit dem Proebenhalter in der genannten Ebene bevorratet sein können und dass durch eine oder mehrere Verschiebebewegungen der Proben ausschließlich in der genannten, gemeinsamen Ebene, die insbesondere auch die Beleuchtungsebene sein kann, jeweils eine Probe in die Probebeleuchtungsposition verbracht werden kann oder aus dieser entfernt werden kann, ohne dass eine Positionierungsbewegung senkrecht zu der genannten gemeinsamen Ebene notwendig ist.

Bei einer ganz besonders vorteilhaften Ausführung wird der Typ des jeweils verwendeten Probenhalters automatisch, insbesondere softwaregesteuert, erkannt, so dass anschließend das sukzessive Positionieren der Proben in der Probenbeleuchtungsposition, insbesondere automatisch, unter Berücksichtigung des erkannten Typs und/oder unter Verwendung einer dem erkannten Typ zugeordneten, insbesondere in einem Softwarespeicher abgelegten, Positionswechselroutine erfolgen kann. Auf diese Weise ist es möglich, unterschiedliche Typen von Probenhaltern, beispielsweise strangförmige oder revolverförmige Probenhalter, verwenden zu können, wobei sich die optische Vorrichtung, vorzugsweise automatisch, an den gerade aktuellen Typ von Probenhalter anpasst.

In vorteilhafter Weise kann vorgesehen sein, dass die zu untersuchenden Proben automatisch, beispielsweise mit einem Bestückungsautomaten, in dem Probenhalter und/oder in einem Subhalter des Probenhalters angeordnet werden. Hierbei kann außerdem vorteilhaft vorgesehen sein, dass die Proben im Hinblick auf die mikroskopische Untersuchung, vorzugsweise automatisch, vorteilhaft innerhalb des Probenhalters ausgerichtet werden.

Der Lichtstreifen kann beispielsweise mit einer Zylinderoptik aus einem im Querschnitt runden Lichtbündel, beispielsweise eines Lasers, erzeugt werden. Es ist alternativ auch möglich, dass der Lichtstreifen ein Quasi-Lichtstreifen ist, der aus einem in einer Lichtstreifenebene kontinuierlich hin- und her bewegtem Lichtbündel besteht. Hierzu kann die optische Vorrichtung beispielsweise eine Strahlablenkvorrichtung aufweisen, mit der ein Lichtbündel vorzugsweise derart schnell in einer Beleuchtungsebene bewegbar ist, dass de facto in der Beleuchtungsebene ein Lichtstreifen vorliegt und/oder dass diese Beleuchtung mit den zur Detektion des von der Probe ausgehenden Lichtes vorgesehenen Detektoren und den nachgeschalteten Auswertevorrichtungen eines Mikroskops nicht von einem kontinuierlichen, beispielsweise mit einer Zylinderoptik erzeugten, Lichtstreifen unterscheidbar ist und/oder dass die aufgenommenen Bilddaten sich nicht oder nicht wesentlich von den Daten unterscheiden, die bei einer Beleuchtung mit einem kontinuierlichen Lichtstreifen erzeugt würden.

Vorzugsweise ist die Lichtstreifenebene, in der sich der umgelenkte Lichtstreifen ausbreitet, senkrecht zur optischen Achse des Beleuchtungsobjektivs und/oder des Detektionsobjektivs ausgerichtet.

Bei einer besonderen Ausführung ist vorgesehen, dass das von der Probe ausgehende Detektionslicht ebenfalls durch das Beleuchtungsobjektiv verläuft und/oder mit dem Beleuchtungsobjektiv kollimiert wird.

Alternativ ist es jedoch auch möglich, dass das von der Probe ausgehende Detektionslicht durch ein Detektionsobjektiv verläuft und/oder mit einem Detektionsobjektiv kollimiert wird. Hierbei kann insbesondere vorgesehen sein, dass die optische Achse des Beleuchtungsobjektivs und die optische Achse des Detektionsobjektivs parallel und/oder kollinear zueinander ausgerichtet sind. Eine solche Ausführung hat den besonderen Vorteil, dass die optische Vorrichtung besonders kompakt und robust ausgeführt werden kann und dass der Probenbeleuchtungsbereich besonders einfach zugänglich ist, so dass ein schnelles und präzises, sukzessives Verbringen der Proben in den Probenbeleuchtungsbereich ermöglicht ist.

Insbesondere kann vorteilhaft vorgesehen sein, dass der Lichtstreifen zunächst in vertikaler Richtung durch das Beleuchtungsobjektiv verläuft und anschließend in horizontale Richtung mit dem Umlenkmittel umgelenkt wird, um eine Schicht der Probe zu beleuchten. Vorzugsweise verläuft das von der beleuchteten Schicht ausgehende Licht, insbesondere Fluoreszenzlicht, in vertikaler Richtung durch ein Detektionsobjektiv. Ein solcher Aufbau ermöglicht die Verwendung von aufrechten oder inversen Standard-Mikroskopstativen zur Herstellung der erfindungsgemäßen optischen Vorrichtung.

Die Umlenkvorrichtung, die beispielsweise einen oder mehrere Umlenkspiegel aufweisen kann, kann vorteilhaft an dem Beleuchtungsobjektiv und/oder an dem Detektionsobjektiv, insbesondere beweglich, befestigt sein. Bei der Verwendung eines inversen Mikroskopstativs zur Herstellung der erfindungsgemäßen optischen Vorrichtung ist eine besonders robuste und kompakte Ausführung dadurch ermöglicht, dass das Umlenkmittel an dem Detektionsobjektiv, das anstelle eines Kondensors an der Kondensorposition des inversen Mikroskopstativs angeordnet ist, gehalten ist.

Im Hinblick auf eine zuverlässige Einstellbarkeit der Einstrahlrichtung und/oder des Einstrahlortes auf die jeweils in der Probenbeleuchtungsposition befindliche Probe, kann vorteilhaft vorgesehen sein, dass das Beleuchtungsobjektiv und die Umlenkvorrichtung relativ zueinander beweglich angeordnet sind und/oder dass die Umlenkvorrichtung beweglich an dem Beleuchtungsobjektiv befestigt ist und/oder dass die Umlenkvorrichtung beweglich an dem Detektionsobjektiv befestigt ist. Eine solche Ausführung erlaubt in vorteilhafter Weise darüber hinaus, ein Beleuchtungsobjektiv mit hoher numerischer Apertur auch dann verwenden zu können, wenn eine zu untersuchende Probe größer als das Bildfeld des Beleuchtungsobjektivs ist. Die Verwendbarkeit hochaperturiger Beleuchtungsobjektive hat den besonderen Vorteil, dass der Lichtstreifen oder der Quasi-Lichtstreifen, der die Probe trifft, besonders dünn ausgeformt sein kann, was das Auflösungsvermögen erhöht.

Im Folgenden wird darauf eingegangen, dass ein Verfahren des Detektionsobjektives vorzugsweise nur innerhalb vorgegebener Bereiche erfolgt.

Durch die seitliche Anordnung der Umlenkmittel jeweils rechts und links ist das Verfahren der Probe bzw. des Probenhalters im Verhältnis zum Detektionsobjektiv eingeschränkt. Um eventuelle Kollisionen mit der Probe zu vermeiden wird eine Absicherung benötigt, die das Positionieren/Verfahren des Probentisches bzw. Probenhalters relativ zum Detektionsobjektiv nur innerhalb vorgegebener Bereiche erlaubt. Diese vorgegebenen Bereiche können sowohl über die Steuerungssoftware als auch über mechanische und elektronische Schalter definiert sein.

Zur Sicherstellung, dass das Umlenkmittel nicht mit der Probe kollidiert, muss ein genügend großer Freiraum zwischen Probe und Umlenkmittel vorhanden sein.

Dieser Freiraum kann auch benutzt werden, um die interessante Stelle innerhalb der Probe in die Mitte des Lichtstreifens zu positionieren.

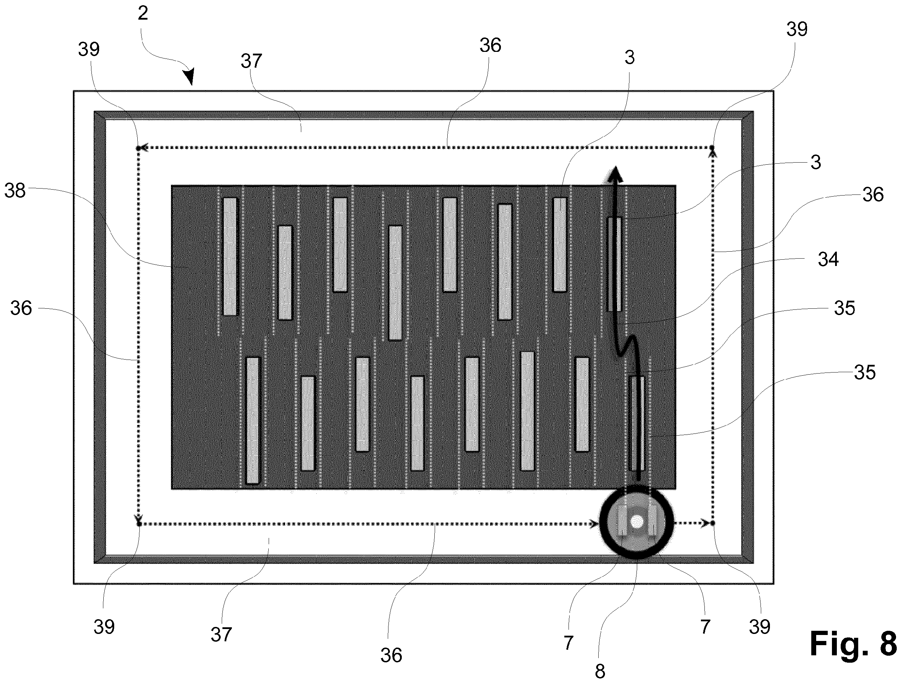

Besonders hinsichtlich der - vorzugsweise softwarebedingten - Definition der Verfahreinschränkung können die vorgegebenen Bereiche festgelegt werden,
a) indem die Anordnung multipler Proben oder Subhalter in einer speziellen Probenkammer bzw. auf einem speziellen Probenhalter genau vorgegeben wird bzw. ist, welche in der Steuerungssoftware gespeichert ist. Diese können nach Bedarf geladen werden, z.B. automatisch durch die Erkennung / das Auslesen beim Einsetzen spezieller Probenhalter oder manuell. Ein Ausführungsbeispiel eines speziellen Probenhalters ist in Fig. 8 gezeigt;
b) und/oder indem die in dem Probenhalter enthaltenen Proben bzw. Subhalter durch ein Bildgebungsverfahren voruntersucht werden und über eine automatisierte Bildanalyse des aufgenommenen Bilds die Positionen bzw. die Anordnung der Proben / Subhalter berechnet werden. Hierfür können unterschiedliche mikroskopische Verfahren verwendet werden, z.B. Konfokal-, Durchlicht-, Phasenkontrast-, Multiphoton-, Reflexions- und Epifluoreszenzmikroskopie. Durch die Anwendung einzelner Verfahren oder durch die Kombination mehrerer Methoden können so die Bereiche bestimmt werden, in denen sich der Probentisch bewegen kann, ohne dass das Umlenkmittel mit der Probe kollidiert. Außerdem können speziell für diesen Zweck hergestellte Probenkammern und Einbettmedien dabei helfen, zum Beispiel durch die Anwendung fluoreszierender Marker, den Probenraum genauer zu charakterisieren.

Zur Detektion des Freiraums bzw. des vorgebbaren Bereichs, in welchem eine Relativbewegung zwischen Umlenkmittel und Probenhalter ohne Kollision zwischen Umlenkmittel und Probe möglich ist, können unterschiedliche optische Methoden eingesetzt werden. Zum einen ist es denkbar, mit einer konfokalen Reflexionsmessung mit Beleuchtungslicht über das Beleuchtungsobjektiv den Übergang vom Deckglas bzw. transparenten Boden des Probenhalters in den Probenbereich zu ermitteln. Liegt eine Probe auf dem Deckglas auf, vermindert sich die Reflexion am Übergang, da typischerweise der Brechungsindex der Probe höher ist als der vom wässrigen Medium. Je höher der Brechungsindexunterschied zwischen Deckglas und Medium/Probe ist, umso höher ist auch die Reflexion am Übergang. Damit lässt sich bestimmen, wo die Probe aufliegt und somit der Freiraum zwischen benachbarten Probenbereichen.

Eine weitere Möglichkeit, um den Freiraum zu bestimmen, sind Verfahren, die die Absorption der Probe ausnutzen. Sowohl mit lichtmikroskopischen Weitfieldverfahren als auch mit scannenden lichtmikroskopischen Verfahren können Bilder aufgenommen werden, die die Umrisse der Probe darstellen und somit den Freiraum zwischen den verschiedenen Proben.

Besteht nur ein geringes Absorptionsverhalten der Probe können weitere kontrastverstärkende Verfahren, wie z.B. Differentialinterferenzkontrast (DIC) oder Phasenkontrast, benutzt werden, um die Umrisse besser darzustellen.

Denkbar ist auch ein Probenauflagemedium (z.B. Agar, Hydrogel) zumindest teilweise mit einem Farbstoff zu versetzen, so dass diese Auflage oder das Einbettmedium detektiert werden kann. Dieser Farbstoff kann sowohl absorbieren als auch fluoreszieren. Sowohl mit Weitfieldmikroskopie oder Konfokal-/Multiphotonenmikroskopie kann dieser Farbstoff und damit der Probenbereich bestimmt werden.

Ganz allgemein und insbesondere auch unabhängig von der vorliegenden Erfindung könnte ein Probenhalter wie folgt ausgebildet sein:
Der Probenhalter umfasst einen ausreichend bemessenen sicheren Bereich (Sicherheitsrand), welcher derart bemessen ist, dass ein Detektionsobjektiv mit Umlenkmitteln rund um einen eingeschränkten Bewegungsbereich bewegbar ist. In diesem Sicherheitsrand befinden sich keine "Störungen" in Form von Proben und/oder Subhalter(n), welche eine Kollision mit dem Detektionsobjektiv bzw. den Umlenkmitteln verursachen können. Weiterhin könnte der Probenhalter einen eingeschränkten Bewegungsbereich aufweisen, in welchem einzelne Proben oder Subhalter angeordnet sein können. Vorzugsweise weisen diese beliebig angeordneten Proben bzw. Subhalter jeweils einen vorgebbaren bzw. notwendigen Abstand zu den benachbarten Proben bzw. Subhaltern auf, um ein Abrastern bzw. Abbilden der Proben zu ermöglichen, ohne eine Probe durch das Detektionsobjektiv bzw. Umlenkmittel zu zerstören.

Ein Abrastern der Proben oder Subhalter entlang nur einer Richtung ist insbesondere dann möglich, wenn die Proben bzw. Subhalter im Wesentlichen parallel und in einem geeigneten Abstand angeordnet sind. Der geeignete Abstand hängt von der Dimensionierung des Umlenkmittels ab.

Bevorzugt weist der Probenhalter Markierungen auf, welche insbesondere im eingeschränkten Bewegungsbereich angeordnet sein können. Das korrekte Platzieren von Proben auf dem Probenbehälter kann hierdurch für einen Bediener erleichtert werden, so dass die erforderlichen Abstände zwischen benachbarten Subhaltern bzw. Probenstreifen eingehalten werden können.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: eine Detailansicht eines Ausführungsbeispiels einer erfindungsgemäßen optischen Vorrichtung zur Erläuterung einer möglichen Ausführung des erfindungsgemäßen Verfahrens,
- Fig. 2: eine Detailansicht eines nicht zur Erfindung gehörenden Beispiels einer optischen Vorrichtung zur Erläuterung einer anderen, möglichen Ausführung eines nicht zur Erfindung gehörenden Verfahrens,
- Fig. 3: eine Detailansicht eines weiteren Ausführungsbeispiels einer erfindungsgemäßen optischen Vorrichtung zur Erläuterung einer weiteren, möglichen Ausführung des erfindungsgemäßen Verfahrens,
- Fig. 4: ein Ausführungsbeispiel einer möglichen, erfindungsgemäßen optischen Vorrichtung,
- Fig. 5: ein Ausführungsbeispiel einer abgewandelten erfindungsgemäßen optischen Vorrichtung,
- Fig. 6: ein anderes Ausführungsbeispiel einer möglichen, erfindungsgemäßen optischen Vorrichtung,
- Fig. 7: eine schematische Darstellung eines möglichen Verlaufs des Lichtstreifens,
- Fig. 8: in einer Aufsicht Ausführungsbeispiel eines speziellen Probenhalters,
- Fig. 9: in einer perspektivischen Ansicht ein Ausführungsbeispiel eines Probenhalters mit Subhaltern und
- Fig. 10: in einer perspektivischen Ansicht ein weiteres Ausführungsbeispiel eines Probenhalters mit Subhaltern.

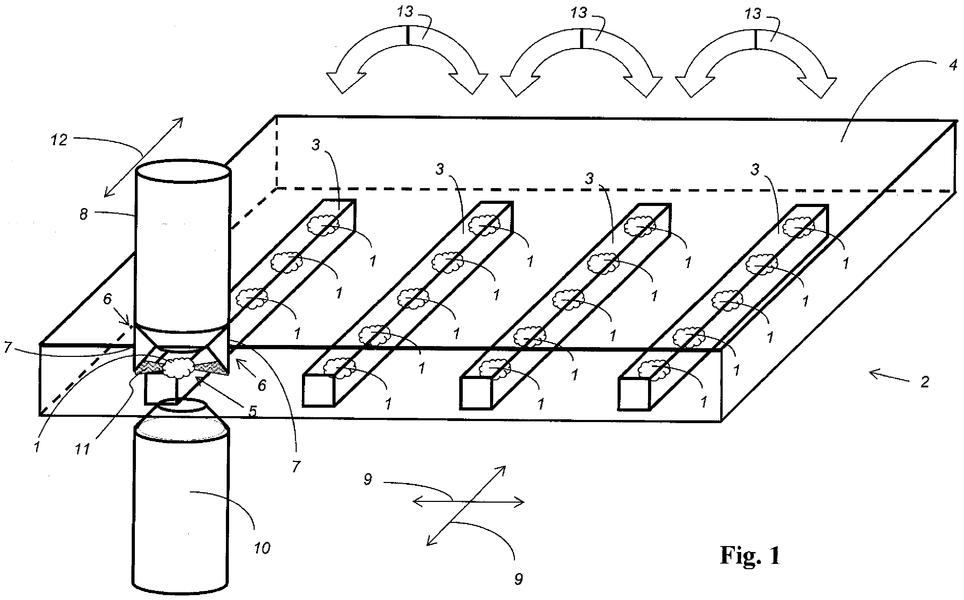

Fig. 1 zeigt eine Detailansicht eines Ausführungsbeispiels einer erfindungsgemäßen optischen Vorrichtung zum mikroskopischen Untersuchen einer Vielzahl von Proben 1 zur Erläuterung einer möglichen Ausführung des erfindungsgemäßen Verfahrens.

Die Optische Vorrichtung weist einen Probenhalter 2 auf, wobei die zu untersuchenden Proben 1 in mehreren Subhaltern 3 des Probenhalters 2 gehaltert sind. Die Subhalter 3 sind jeweils als strangförmiger Quader ausgebildet. Jeder Subhalter 3 besteht aus einem formstabilen Einbettungsmedium, beispielsweise aus Agarose oder aus einem - vorzugsweise ähnlichen - gelartigen, durchsichtigen Medium, in das die von dem jeweiligen Subhalter 3 gehaltenen Proben 1 eingebettet sind. Die Subhalter 3 sind in einer gemeinsamen, vorzugsweise horizontalen, Ebene und parallel zueinander in einer durchsichtigen Schale 4 des Probenhalters 2 angeordnet, die mit einer Immersionsflüssigkeit (nicht dargestellt) gefüllt ist. Durch diese spezielle Ausbildung des Probenhalters 2 und die spezielle Anordnung der gehaltenen Proben 1 verbleibt in vorteilhafter Weise beidseitig der Proben 1 jeweils ein Freiraum für ein Umlenkmittel 6, das zwei von einem Detektionsobjektiv 8 gehaltene Umlenkspiegel 7 aufweist.

Das Detektionsobjektiv 8 ist während der mikroskopischen Untersuchung einer der Proben in die (nicht dargestellte) Immersionsflüssigkeit eingetaucht. Das Umlenkmittel 6, das an dem Detektionsobjektiv 8 angebracht ist, befindet sich während der mikroskopischen Untersuchung in der Immersionsflüssigkeit.

Das Umlenkmittel 6 dient dazu, einen aus einem Beleuchtungsobjektiv 10 ausgetretenen Lichtstreifen 11 zu einer Beleuchtungsposition 5 so umzulenken, dass sich der Lichtstreifen 11 unter einem von Null Grad verschiedenen Winkel, insbesondere unter einem rechten Winkel, zur optischen Achse des Beleuchtungsobjektivs 10 ausbreitet. Auf diese Weise wird eine Schicht der in der Beleuchtungsposition 5 befindlichen Probe 1 mit dem vom Beleuchtungsobjektiv 10 fokussierten Lichtstreifen beleuchtet.

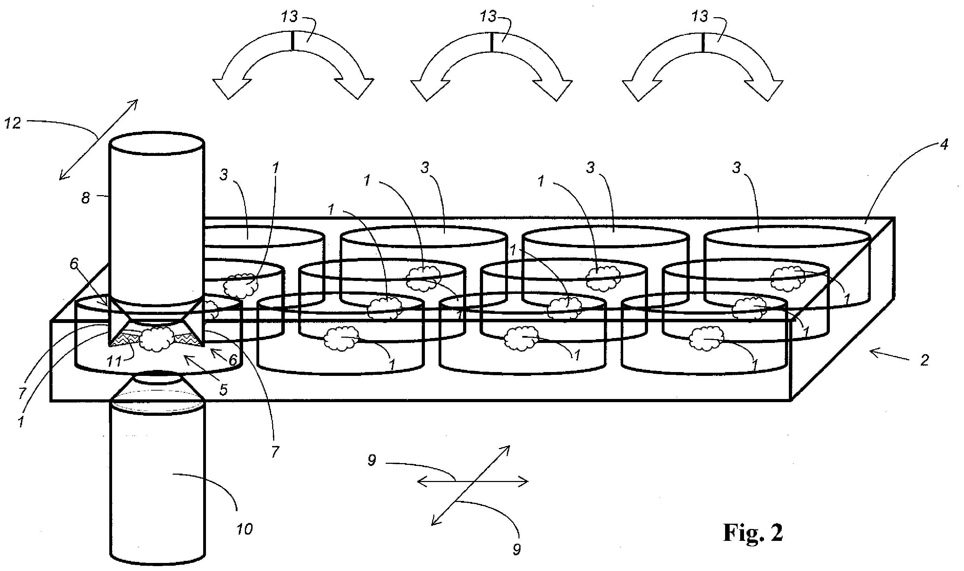

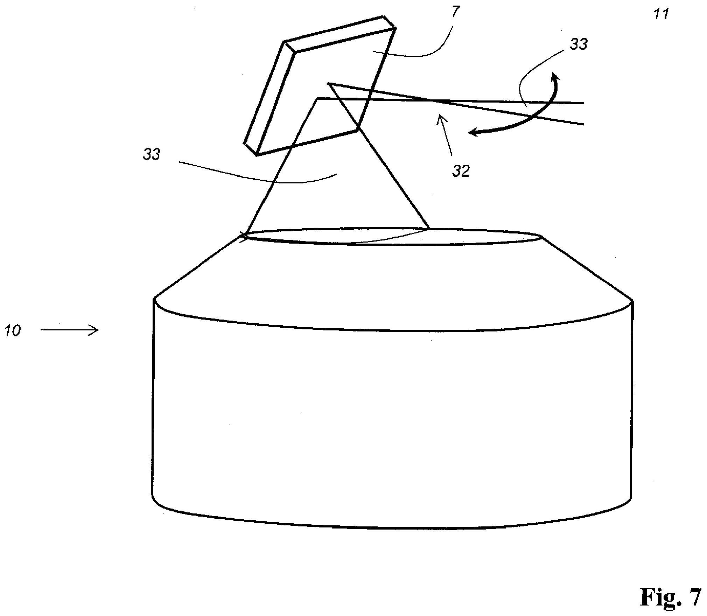

In der Figur 1 und in den Figuren 2 bis 6 ist der Lichtstreifen 11 der besseren Übersichtlichkeit halber nur teilweise und schematisch eingezeichnet. Eine etwas genauere Darstellung des Verlaufs des Lichtstreifens 11 findet sich in Figur 7.

Das von der beleuchteten Schicht ausgehende Detektionslicht, insbesondere Fluoreszenzlicht, wird durch das Detektionsobjektiv 8 hindurch zu einem (in Figur 1 nicht dargestellten) Detektor geleitet. Der Detektor kann beispielsweise einen Sensor zum Erfassen eines zweidimensionalen Bildes, beispielsweise einen CCD-Sensor, aufweisen.

Nachdem die gewünschten Bildinformationen bezüglich der beleuchteten Schicht aufgenommen sind, können der Probenhalter 2 und die jeweils in der Probenbeleuchtungsposition 5 befindliche Probe 1 relativ zueinander senkrecht zur Ebene des umgelenkten Lichtstreifens 11 und/oder parallel zur optischen Achse des Beleuchtungsobjektivs 10 verschoben werden, um eine weitere, andere Schicht der Probe 1 zu beleuchten und mikroskopisch zu untersuchen. Alternativ ist es auch möglich, das Umlenkmittel und/oder das Beleuchtungsobjektiv 10 zu bewegen, um mit dem umgelenkten Lichtstreifen 11 eine andere Schicht der Probe 1 zu beleuchten. Beispielsweise kann das Beleuchtungsobjektiv 10 in Richtung seiner optischen Achse zum Wechseln der Beleuchtungsschicht bewegt werden. Alternativ oder zusätzlich ist es beispielsweise auch möglich, das Umlenkmittel 6 parallel zur Ebene des umgelenkten Lichtstreifens 11 und/oder senkrecht zur optischen Achse des Beleuchtungsobjektivs 10 zu verschieben, um mit dem umgelenkten Lichtstreifen 11 eine andere Schicht der Probe 1 zu beleuchten.

Durch sukzessives Abtasten mehrerer Schichten kann so eine dreidimensionale Abbildung der die jeweils in der Probenbeleuchtungsposition 5 befindliche Probe 1 bzw. können Bilddaten gewonnen werden, die eine dreidimensionale Abbildung der jeweils in der Probenbeleuchtungsposition 5 befindliche Probe 1 ermöglichen.

Der Probenhalter 2, der die Proben 1 hält, ist vorzugsweise motorisch und/oder automatisch, relativ zu der Probenbeleuchtungsposition 5 derart bewegbar gelagert, dass sukzessive jeweils zumindest eine der Proben 1 in der Probenbeleuchtungsposition 5 positionierbar ist. Vorzugsweise ist der Probenhalter 2 mit einer Verschiebevorrichtung in zwei zueinander senkrechten Richtungen, von denen eine vorzugsweise die Längserstreckungsrichtung der Subhalter 3 ist, geführt bewegbar angeordnet, was in der Figur durch die Doppelpfeile 9 illustriert ist.

Dadurch, dass seitlich neben - und zwischen den Subhaltern 3 ausreichend Freiraum für das Umlenkmittel 6 verbleibt, kann durch eine einfache, insbesondere horizontale, Linearbewegung des Probenhalters 2 relativ zu dem Beleuchtungsobjektiv 10 jeweils die nächste Probe in die Beleuchtungsposition 5 verbracht und mikroskopisch untersucht werden. Zum Wechseln von einer Probe 1 zur nächsten Probe 1 desselben Subhalters 3 ist in vorteilhafter Weise lediglich und ausschließlich eine einzige Linearbewegung des Probenhalters 2 relativ zu dem Beleuchtungsobjektiv 10 nötig, was durch den Doppelpfeil 12 angedeutet ist. Lediglich zum Wechseln von einem Subhalter 3 zum nächsten Subhalter 3, was durch die gekrümmten Doppelpfeile 13 illustriert ist, ist auch eine Relativbewegung des Detektionsobjektivs samt dem Umlenkmittel in vertikaler Richtung erforderlich.

Fig. 2 zeigt eine Detailansicht einer nicht zur Erfindung gehörenden, optischen Vorrichtung. Bei dieser Ausführung sind die Subhalter 3 des Probenhalters 2 - ebenso wie bei der in Fig. 1 gezeigten Ausführung - in einer durchsichtigen Schale 4 angeordnet. Jedoch anders als bei der in Fig. 1 gezeigten Ausführung sind die Subhalter 3 des Probenhalters als weitere, durchsichtige und mit einem durchsichtigen, vorzugsweise flüssigem, Einbettungsmedium gefüllte Schalen ausgebildet, in denen jeweils mindestens eine Probe 1 angeordnet ist. Die weiteren Schalen sind innerhalb der durchsichtigen Schale 4 in einer gemeinsamen Ebene matrixförmig angeordnet.

Zum Positionieren einer Probe 1 in der Beleuchtungsposition 5 wird das Detektionsobjektiv 8 samt dem Umlenkmittel jeweils von oben in die weiteren Schalen eingeführt, was in der Figur durch die gekrümmten Doppelpfeile 13 illustriert ist. Der Probenhalter ist auch bei dieser Ausführung mit einer (nicht dargestellten) Verschiebevorrichtung in zwei zueinander senkrechten Richtungen geführt bewegbar angeordnet, was in der Figur durch die Doppelpfeile 9 illustriert ist.

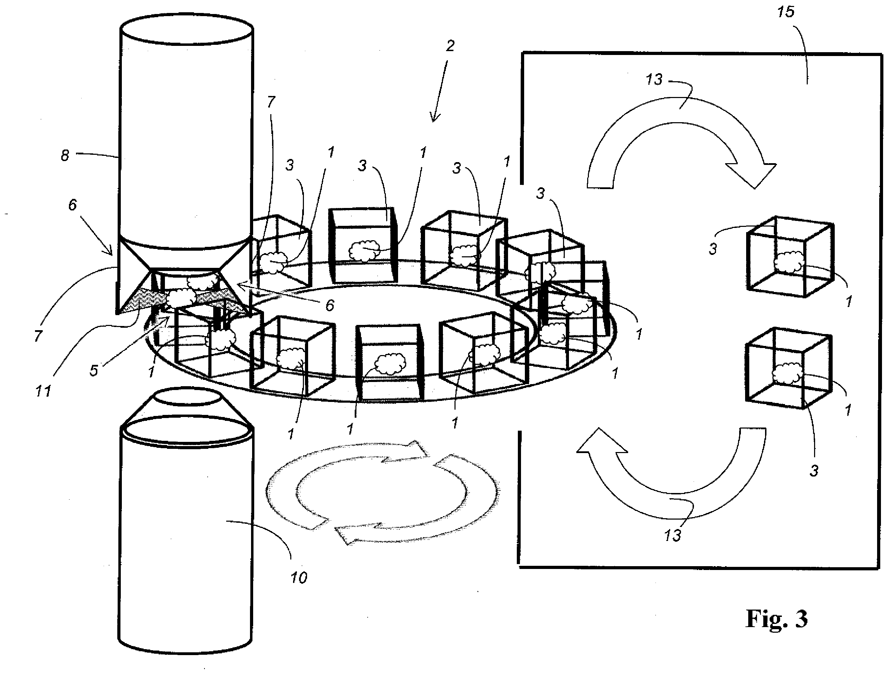

Fig. 3 zeigt eine Detailansicht eines weiteren Ausführungsbeispiels einer erfindungsgemäßen optischen Vorrichtung, bei der der Probenhalter 2 einen Revolver 14 aufweist, der eine Vielzahl jeweils in einem Subhalter 3 gehaltenen Proben 1 trägt. Die Subhalter 3 sind würfelförmig ausgebildet, allerdings gibt es keine Beschränkung auf eine solche Form; vielmehr sind auch andere geometrische Formen möglich. Die Subhalter 3 bestehen jeweils aus einem formstabilen Einbettungsmedium, beispielsweise aus Agarose oder einem - vorzugsweise ähnlichen - gelartigen, durchsichtigen Medium, in das jeweils mindestens eine Probe 1 eingebettet ist.

Durch Drehen des Revolvers 14 können die Proben sukzessive in die Beleuchtungsposition 5 verbracht und mikroskopisch untersucht werden.

Das in Fig. 3 gezeigte Ausführungsbeispiel weist außerdem eine Handhabungsvorrichtung 14 auf, die die Subhalter 3 mit den zu untersuchenden Proben 1 automatisch in dem Revolver 14 anordnet und bereits untersuchte Proben 1 samt ihren Subhaltern 3 aus dem Revolver 14 entnimmt.

Hierbei kann insbesondere vorteilhaft vorgesehen sein, dass die Handhabungsvorrichtung 14, vorzugsweise automatisch, die Proben 1, die bereits untersucht wurden und bereits aus der Probenbeleuchtungsposition 5 durch Drehen des Revolvers 14 entfernt wurden, von dem Revolver 14 entnimmt und weitere, neue zu untersuchende Proben 1 samt deren Subhaltern 3 an den Revolver 14, insbesondere an die durch Entnehmen der bereits untersuchten Proben 1 freigewordene Positionen, übergibt. Auf diese Weise ist vorteilhaft ein kontinuierlicher Untersuchungsprozess erreicht, bei dem sukzessive, endlos und unterbrechungsfrei Proben 1 untersucht werden können.

In der Figur 3 ist, wie bereits erwähnt, der Lichtstreifen 11 der besseren Übersichtlichkeit halber nur teilweise und schematisch eingezeichnet. Außerdem sind der besseren Übersichtlichkeit halber im Bereich der Beleuchtung einige Konturlinien der dortigen Subhalter 3 nicht oder nur teilweise eingezeichnet.

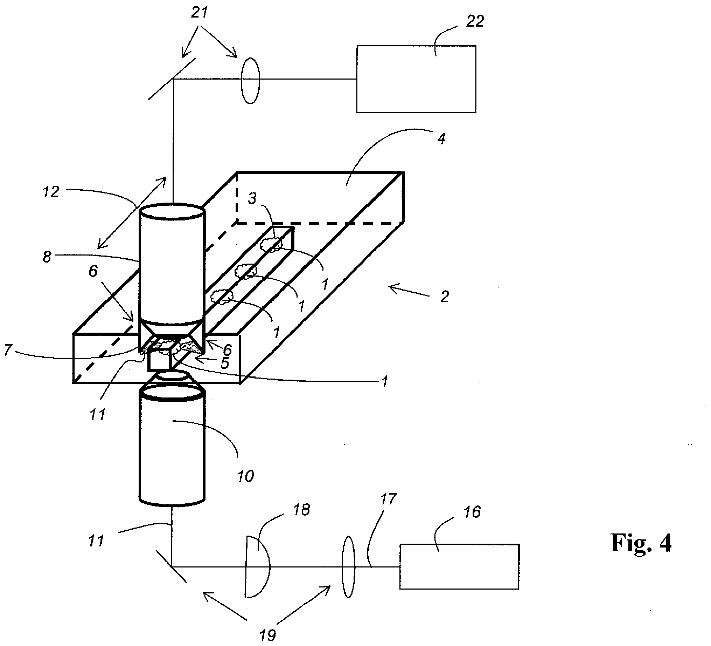

Fig. 4 zeigt ein Ausführungsbeispiel einer möglichen, erfindungsgemäßen optischen Vorrichtung mit einem Probenträger 2, der ähnlich aufgebaut ist, wie der in Fig. 1 gezeigte Probenträger. Der Probenträger 2 beinhaltet jedoch lediglich einen Subträger 3.

Die optische Vorrichtung weist eine Lichtquelle 16 auf, die als Laser ausgebildet ist und ein im Querschnitt im Wesentlichen rundes Lichtbündel 17 emittiert. Das Lichtbündel 17 wird mit Hilfe einer Zylinderoptik 18 zu einem Lichtstreifen 11 geformt und gelangt anschließend zu dem Beleuchtungsobjektiv 10. Zur Führung und Formung des Lichtbündels 17 und des Lichtstreifens 11 sind optische Elemente 19, wie beispielsweise Spiegel und Linsen, vorhanden. Der Vorgang des Beleuchtens erfolgt so, wie in Bezug auf die in Fig. 1 dargestellte Ausführungsform oben beschrieben.

Das von der Probe 1 ausgehende Detektionslicht 20 gelangt über weitere optische Elemente 21 zu einem Detektor 22.

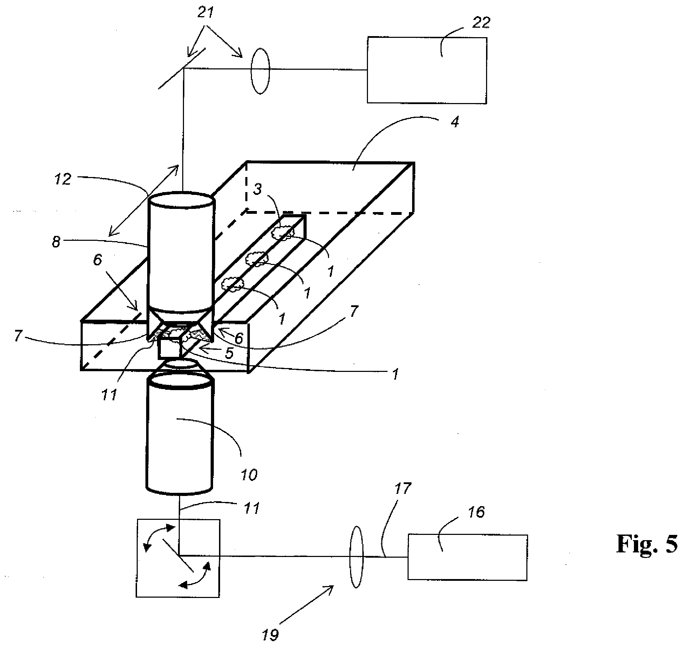

Fig. 5 zeigt ein Ausführungsbeispiel einer gegenüber der Ausführung, die in Fig. 4 dargestellt ist, abgewandelte Ausführung. Bei dieser Ausführung wird das von der Lichtquelle 16 erzeugte, im Querschnitt runde Lichtbündel 17 mit Hilfe einer Strahlablenkeinrichtung 23, die beispielsweise einen Galvanometerspiegel beinhalten kann, derart schnell in einer Ebene abgelenkt wird, dass de facto in der Beleuchtungsebene ein Lichtstreifen 11 vorliegt und/oder dass diese Beleuchtung mit den zur Detektion des von der Probe 1 ausgehenden Lichtes vorgesehenen Detektoren 22 und den nachgeschalteten Auswertevorrichtungen eines Mikroskops nicht von einem mit einer Zylinderoptik erzeugten Lichtstreifen 11 unterscheidbar ist und/oder dass die aufgenommenen Bilddaten sich nicht oder nicht wesentlich von den Daten unterscheiden, die bei einer Beleuchtung mit einem kontinuierlichen Lichtstreifen 11 erzeugt würden.

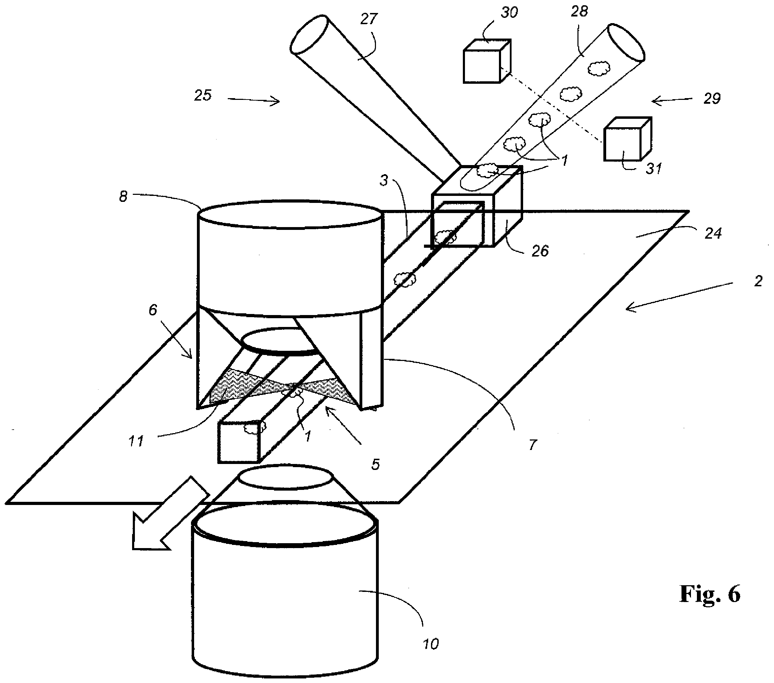

Fig. 6 zeigt ein anderes Ausführungsbeispiel einer möglichen, erfindungsgemäßen optischen Vorrichtung.

Bei diesem Ausführungsbeispiel besteht der Probenhalter 2 aus einer durchsichtigen Objektträgerplatte 24, die einen quaderförmigen Subhalter 3 aus Agarose oder einem ähnlichen Medium trägt. In den Quader sind die zu untersuchenden Proben 1 eingebettet. Um nacheinander die einzelnen zu untersuchenden Proben 1 in die Beleuchtungsposition 5 zu verbringen, wird der Probenhalter 2 schrittweise in Richtung der Längserstreckungsrichtung des Subhalters 3 verschoben.

Eine Besonderheit besteht darin, dass der Subhalter 3 während des laufenden Untersuchungsprozesses hergestellt wird. Hierzu ist ein Subhalter-Erzeugungsmittel 25, das ein Formungsmittel 26 aufweist, vorhanden. Das Subhalter-Erzeugungsmittel 25 empfängt über eine erste Zuleitung 27 einerseits Agarose oder ein ähnliches, durchsichtiges Medium, und andererseits über eine zweite Zuleitung 28 einzubettende Proben 1. Es ist außerdem eine Lichtschrankenanordnung 29 mit einer Lichtquelle 30 und einem Lichtempfänger 31 vorgesehen, die die Abfolge der durch die zweite Zuleitung 28 zugeführten Proben 1 detektiert.

Das Formungsmittel 26 ist relativ zu dem Beleuchtungsobjektiv 10 ortsfest angeordnet und bewegt sich nicht mit der Objektträgerplatte 24 mit.

Fig. 7 zeigt eine schematische Darstellung eines möglichen Verlaufs des Lichtstreifens 11. In diesem Ausführungsbeispiel wird der Lichtstreifen 11 dadurch erzeugt, dass ein Lichtbündel 33 mit einer nicht dargestellten Strahlablenkeinrichtung kontinuierlich hin- und her bewegt wird, was in der Figur durch den gebogenen Doppelpfeil angedeutet ist. Insoweit ist in der Figur der besseren Übersichtlichkeit halber lediglich eine kurze Momentaufnahme dargestellt.

Das kontinuierlich hin- und her bewegte, aus dem Beleuchtungsobjektiv 10 austretende und von dem Beleuchtungsobjektiv 10 fokussierte Lichtbündel 33 gelangt zu einem Umlenkspiegel 7 und wird von diesem derart umgelenkt, dass er sich anschließend unter einem von 0° verschiedenen Winkel, im vorliegenden Beispiel unter einem Winkel von 90°, zur optischen Achse des Beleuchtungsobjektivs 10 ausbreitet. In der Beleuchtungsposition 5 weist das Lichtbündel 33 einen Fokus 32 auf. Der durch das schnelle Hin- und Herbewegen erzeugte Quasi-Lichtstreifen 11 befindet sich folglich in einer zur optischen Achse des Beleuchtungsobjektivs 10 senkrechten Ebene.

Es ist auch möglich, aber nicht zwingend erforderlich, die jeweils in der Beleuchtungsposition 5 befindliche Probe 1 mit mehreren Lichtstreifen 11, die sich nach dem Umlenken vorzugsweise alle in derselben Beleuchtungsebene ausbreiten, aus verschiedenen Richtungen - simultan oder sequenziell - zu beleuchten. Dieser Fall ist in der Figur der besseren Übersichtlichkeit halber jedoch nicht eingezeichnet.

In Fig. 8 ist ein Ausführungsbeispiel eines speziellen Probenhalters gezeigt. Mit dem Bezugszeichen 34 ist die Bewegungsrichtung des Detektionsobjektivs 8 - welches lediglich schematisch angedeutet ist - dargestellt, bei welcher keine Kollision zwischen dem Umlenkmittel 6 bzw. den Umlenkspiegeln 7 und dem Probenstreifen bzw. Subhalter 3 erfolgt. Ein Probenstreifen kann beispielsweise aus Agar-Agar gebildet sein und kann ein bis mehrere Proben enthalten. Die gepunktet eingezeichneten Linien 35 deuten den Bewegungsverlauf der Umlenkspiegel 7 an, wobei die Umlenkspiegel 7 im Freiraum bzw. des vorgebbaren Bereich bewegt werden können, ohne mit dem Probenstreifen bzw. Subhalter 3 zu kollidieren. Grundsätzlich hängt der Freiraum bzw. der vorgebbare Bereich von dem Abstand der beiden Umlenkspiegel 7 und von der Ausdehnung des Probenstreifens bzw. Subhalters 3 ab. Weiterhin muss der Abstand zwischen zwei benachbarten Subhaltern 3 ausreichend groß sein, um Kollisionen zwischen den Subhaltern 3 und den Umlenkmitteln 6 bzw. Umlenkspiegeln 7 bzw. sonstigen Bauteilen, welche an dem Detektionsobjektiv 8 angeordnet sind, zu vermeiden.

Mit der gepunktet eingezeichneten Mittellinie 36 ist ein möglicher Bewegungsverlauf in einem sicheren Bereich 37 gezeigt, in welchem das Detektionsobjektiv 8 bewegt werden kann, ohne einen Probenstreifen bzw. Subhalter 3 zu durchschneiden. Der eingeschränkte Bewegungsbereich 38, in welchem sich die Probenstreifen bzw. Subhalter 3 befinden dürfen, ist grau hinterlegt gezeigt. In dem eingeschränkten Bewegungsbereich 38 darf eine Relativbewegung zwischen Probenhalter 2 und dem Detektionsobjektiv 8 nur in bestimmten, zum Subhalter 3 parallelen Bewegungsbahnen erfolgen, und zwar derart, dass immer sichergestellt ist, dass keine Probe bzw. Subhalter 3 durch das Beobachtungsobjektiv 8 beschädigt werden kann. Der Probenhalter 2 weist integrierte Kalibrierobjekte bzw. Marker 39 auf, welche markante Punkte an vorgegebenen Positionen, fluoreszierende Punkte, fluoreszierende Muster (beat cluster) oder im mikroskopischen Durchlichtmodus sichtbare Mikrostrukturen aufweisen. Ein solcher integrierter Marker 39 könnte insbesondere auch zu Kalibrierzwecken dienen, er könnte nämlich angefahren werden, um beispielsweise eine Relativposition zwischen Beleuchtungs- und/oder Detektionsobjektiv und dem Probenhalter 2 bestimmen zu können.

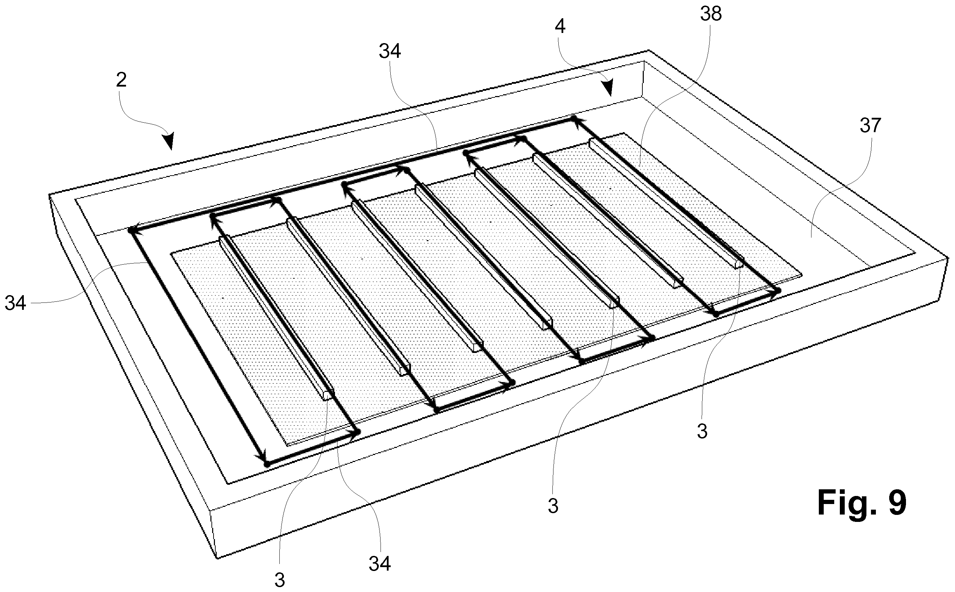

In Fig. 9 ist in einer perspektivischen Ansicht ein Ausführungsbeispiel eines Probenhalters 2 mit im Wesentlichen länglich ausgebildeten Subhaltern 3 in einer Schale 4 gezeigt. Die Subhalter 3 sind im Wesentlichen parallel zueinander angeordnet. Der Bewegungsverlauf 37 des in Fig. 9 nicht gezeigten Detektionsobjektivs hat eine Mäanderform bzw. erstreckt sich in dem sicheren Bereich entlang der Längsseite und der Querseite des Probenhalters 2. Bei einem speziellen Probenhalter 2 können die Positionen der Subhalter 3 fest vorgegeben sein. Die Positionen können aus einem Speicher ausgelesen werden, wenn das System erkennt, dass Proben auf dem speziellen Probenhalter 2 detektiert werden sollen.

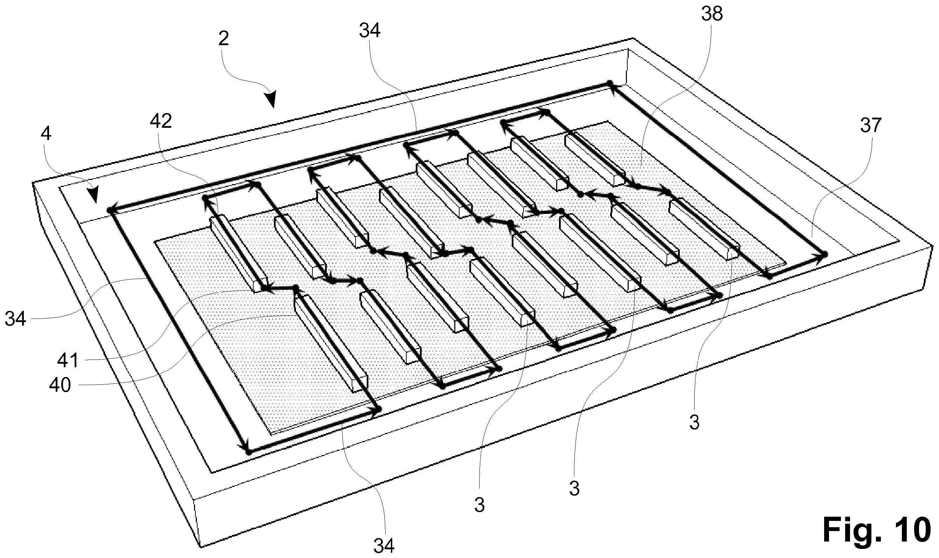

In Fig. 10 ist in einer perspektivischen Ansicht ein weiteres Ausführungsbeispiel eines Probenhalters 2 mit Subhaltern 3 in einer Schale 4 gezeigt. Die Subhalter 3 können unterschiedliche Längen aufweisen und sind im Wesentlichen parallel zueinander angeordnet. Die Längsrichtungen der Subhalter 3 können jedoch auch entlang unterschiedlicher Richtungen orientiert sein (nicht gezeigt) bzw. nicht parallel angeordnet sein. In Fig. 10 ist ein optimiert berechneter Bewegungsverlauf 37 des in Fig. 10 nicht gezeigten Detektionsobjektivs gezeigt. Dies könnten der kürzeste Bewegungsverlauf des Detektionsobjektivs und/oder die kürzeste Detektionsdauer sein, wobei jedoch eine Kollision zwischen Detektionsobjektiv/Umlenkmittel und der Probe vermieden werden soll. So wird z.B. innerhalb des eingeschränkten Bewegungsbereichs 38 der kürzeste Bewegungsverlauf zwischen dem Endpunkt 40 des einen Subhalters 3 und dem Anfangspunkt 41 des nächsten Subhalters 3 ermittelt. Liegt der Endpunkt 42 zu nahe am Rand des eingeschränkten Bewegungsbereiches 38, so wird der nächste Subhalter 3 über den sicheren Bereich 37 angefahren.

## Patentansprüche

1. Verfahren zum mikroskopischen Untersuchen einer Vielzahl von Proben, **gekennzeichnet durch** folgende Schritte:
a. Anordnen der Proben (1) in einem Probenhalter (2), der wenigstens einen strangförmigen Subhalter aufweist, mit dem mindestens eine Reihe von Proben (1) gehaltert ist, wobei der Probenhalter (2) motorisch und/oder automatisch relativ zu einer Probenbeleuchtungsposition (5) derart bewegbar angeordnet ist, dass sukzessive jeweils zumindest eine der Proben (1) in der Probenbeleuchtungsposition (5) positionierbar ist, wobei jeweils angrenzend an die Probe (1), die sich gerade in der Probenbeleuchtungsposition (5) befindet, ein Freiraum für ein Umlenkmittel (6) verbleibt,
b. Fokussieren eines Lichtstreifens (11) mit einem Beleuchtungsobjektiv (10),
c. Umlenken des Lichtstreifens (11) nachdem dieser das Beleuchtungsobjektiv (10) durchlaufen hat mit dem Umlenkmittel (6) derart, dass sich der Lichtstreifen (11) unter einem von Null Grad verschiedenen Winkel oder unter einem Winkel größer als 10 Grad oder unter einem rechten Winkel, zur optischen Achse des Beleuchtungsobjektivs (10) ausbreitet und in der Probenbeleuchtungsposition (5) einen Fokus aufweist,
d. Sukzessives Positionieren der mit dem Probenhalter (2) gehalterten Proben (1) in der Probenbeleuchtungsposition (5) und Detektieren des von der jeweils in der Probenbeleuchtungsposition (5) befindlichen Probe (1) ausgehenden Detektionslichtes, wobei
e. der Probenhalter (2), in dem die Proben (1) in wenigstens einer geraden Reihe gehalten sind, schrittweise in Richtung der Längserstreckungsrichtung des Subhalters (3) verschoben wird, um nacheinander die einzelnen zu untersuchenden Proben (1) in die Probenbeleuchtungsposition (5) zu bringen, oder
f. der Probenhalter gedreht wird, um jeweils die nächste zu untersuchende Probe in der Beleuchtungsposition zu positionieren, wobei die Proben (1) mit dem Probenhalter (2) in einer gebogenen oder in einer ringförmigen Reihe gehalten sind.

2. Verfahren nach Anspruch 1, **dadurch gekennzeichnet, dass**
a. der Probenhalter (2) mehrere Subhalter (3) aufweist, mit denen jeweils mindestens eine Probe (1) gehaltert ist und/oder dass
b. der Probenhalter (2) mehrere strangförmige Subhalter (3) aufweist, die in einer gemeinsamen Ebene und/oder parallel zueinander ausgerichtet sind und/oder dass
c. der Probenhalter (2) mehrere würfelförmige Subhalter (3) aufweist, mit denen jeweils mindestens eine der Proben (1) gehaltert ist und/oder dass
d. der Probenhalter (2) als Schalen ausgebildete Subhalter (3) aufweist, in denen jeweils mindestens eine Probe (1) angeordnet ist und/oder dass
e. der Probenhalter (2) eine Röhre aufweist, in der wenigstens eine der Proben (1) gehalten ist oder in der mehrere der Proben (1) angeordnet oder aufgereiht sind und/oder dass
f. die Probenbeleuchtungsposition (5) außerhalb des Beleuchtungsobjektivs (10), jedoch in Verlängerung der optischen Achse des Beleuchtungsobjektivs (10) angeordnet ist.

3. Verfahren nach Anspruch 2a bis 2f, **dadurch gekennzeichnet, dass** wenigstens ein Subhalter (3) ein Einbettungsmedium oder Agarose oder ein gelartiges, durchsichtiges Medium, aufweist, in das die von dem Subhalter (3) gehaltene Probe (1) eingebettet ist oder die von dem Subhalter (3) gehaltenen Proben (1) eingebettet sind.

4. Verfahren nach einem der Ansprüche 1 bis 3, **dadurch gekennzeichnet, dass**
a. die Proben (1), die bereits untersucht wurden und bereits aus der Probenbeleuchtungsposition (5) entfernt wurden aus dem Probenhalter (2) entnommen werden oder dass
b. die Proben (1), die bereits untersucht wurden und bereits aus der Probenbeleuchtungsposition (5) entfernt wurden aus dem Probenhalter (2) entnommen werden und weitere zu untersuchende Proben (1) an den Probenhalter (2) oder an freigewordene Positionen des Probenhalters (2) übergeben werden.

5. Verfahren nach einem der Ansprüche 1 bis 4, **dadurch gekennzeichnet, dass**
a. der Probenhalter (2) gedreht wird, um jeweils die nächste zu untersuchende Probe (1) in der Beleuchtungsposition (5) zu positionieren und/oder dass
b. der Probenhalter (2) um die optische Achse des Beleuchtungsobjektivs (10) oder um eines zur optischen Achse des Beleuchtungsobjektivs (10) parallele Achse gedreht wird, um jeweils die nächste zu untersuchende Probe (1) in der Beleuchtungsposition (5) zu positionieren und/oder dass
c. der Probenhalter (2) relativ zur Beleuchtungsposition (5) in wenigstens einer Richtung linear verschoben wird, um jeweils die nächste zu untersuchende Probe (1) in der Beleuchtungsposition (5) zu positionieren und/oder dass
d. eine Verschiebevorrichtung vorhanden ist, mit der der Probenhalter (2) in zwei verschiedene Richtungen oder in zweizueinander orthogonale Richtungen verschiebbar ist und/oder dass
e. eine Verschiebevorrichtung vorhanden ist, mit der der Probenhalter (2) in drei verschiedene Richtungen oder in drei zueinander orthogonale Richtungen verschiebbar ist.

6. Verfahren nach einem der Ansprüche 1 bis 5, **dadurch gekennzeichnet, dass**
a. das Umlenkmittel (6) und die in der Beleuchtungsposition (5) befindliche Probe (1) in einer gemeinsamen Ebene angeordnet sind, wobei das Umlenkmittel (6) innerhalb dieser Ebene die in der Beleuchtungsposition (5) befindliche Probe (1) nur unvollständig oder nur einseitig oder auf zwei gegenüberliegenden Seiten umgibt, und/oder dass
b. wenigstens ein Bereich innerhalb einer Ebene, in der sich die Probenbeleuchtungsposition (5) und das Umlenkmittel (6) befinden, frei bleibt, durch den Proben (1) in die Probenbeleuchtungsposition (5) verbracht und aus dieser entfernt werden können.

7. Verfahren nach einem der Ansprüche 1 bis 6, **dadurch gekennzeichnet, dass** der Typ des jeweils verwendeten Probenhalters (2) automatisch und/oder softwaregesteuert erkannt wird und dass das sukzessive Positionieren der Proben (1) in der Beleuchtungsposition (5) unter Berücksichtigung des erkannten Typs und/oder unter Verwendung einer dem erkannten Typ zugeordneten oder in einem Softwarespeicher abgelegten Positionswechselroutine erfolgt.

8. Verfahren nach einem der Ansprüche 1 bis 7, **dadurch gekennzeichnet, dass** die zu untersuchenden Proben (1) automatisch in dem Probenhalter (2) und/oder in einem Subhalter (3) des Probenhalters (2) angeordnet werden.

9. Verfahren nach einem der Ansprüche 1 bis 8, **dadurch gekennzeichnet, dass** der Lichtstreifen (11) ein Quasi-Lichtstreifen ist, der aus einem in einer Lichtstreifenebene kontinuierlich hin- und herbewegtem Lichtbündel besteht.

10. Verfahren nach einem der Ansprüche 1 bis 9, **dadurch gekennzeichnet, dass** der Lichtstreifen (11) derart in das Beleuchtungsobjektiv (10) eingekoppelt wird, dass er außermittig durch das Beleuchtungsobjektiv (10) verläuft.

11. Verfahren nach einem der Ansprüche 1 bis 10, **dadurch gekennzeichnet, dass** das von der Probe (1) ausgehende Detektionslicht ebenfalls durch das Beleuchtungsobjektiv (10) verläuft und/oder mit dem Beleuchtungsobjektiv (10) kollimiert wird.

12. Verfahren nach einem der Ansprüche 1 bis 11, **dadurch gekennzeichnet, dass** das von der Probe (1) ausgehende Detektionslicht durch ein Detektionsobjektiv (8) verläuft und/oder mit einem Detektionsobjektiv (8) kollimiert wird.

13. Verfahren nach Anspruch 12, **dadurch gekennzeichnet, dass** die optische Achse des Beleuchtungsobjektivs (10) und die optische Achse des Detektionsobjektivs (8) parallel und/oder kollinear zueinander ausgerichtet sind.

14. Verfahren nach einem der Ansprüche 1 bis 13, **dadurch gekennzeichnet, dass**
a. das Beleuchtungsobjektiv (10) und die Umlenkvorrichtung (6) relativ zueinander beweglich angeordnet sind und/oder dass
b. die Umlenkvorrichtung (6) beweglich an dem Beleuchtungsobjektiv (10) befestigt ist und/oder dass
c. die Umlenkvorrichtung (6) beweglich an dem Detektionsobjektiv (8) befestigt ist.

15. Mikroskop, das eingerichtet ist zur Erzeugung eines Lichtstreifens (11), mit einem Beleuchtungsobjektiv (10) zur Fokussierung des Lichtstreifens (11) und mit einem Umlenkmittel (6) zur Umlenkung des durch das Beleuchtungsobjektiv durchlaufenen Lichtstreifens (11) in einen von Null Grad verschiedenen Winkel oder in einen Winkel größer 10 Grad oder unter einen rechten Winkel zur optischen Achse des Beleuchtungsobjektivs (10) und mit einem Probenhalter (2), der wenigstens einen strangförmigen Subhalter (3) aufweist, mit dem mindestens eine Reihe von Proben (1) in wenigstens einer geraden, gebogenen oder ringförmigen Reihe halterbar ist, wobei der Probenhalter (2) motorisch und/oder automatisch relativ zu einer Probenbeleuchtungsposition (5) derart bewegbar angeordnet ist, dass sukzessive jeweils zumindest eine der Proben (1) in der Probenbeleuchtungsposition (5) positionierbar ist, wobei jeweils angrenzend an die Probe (1), die sich gerade in der Probenbeleuchtungsposition (5) befindet, ein Freiraum für das Umlenkmittel (6) verbleibt, wobei die optische Vorrichtung ausgebildet ist, ein Verfahren nach einem der Ansprüche 1 bis 14 auszuführen.

## Claims

1. Method for microscopically examining a large number of samples, **characterized by** the following steps:
a. arranging the samples (1) in a sample holder (2) having at least one strand-shaped subholder, with which at least one row of samples (1) is held, wherein the sample holder (2) is arranged to be movable relative to a sample illumination position (5) by way of a motor and/or automatically in a manner such that, successively, in each case at least one of the samples (1) is positionable in the sample illumination position (5), wherein a free space for a deflection means (6) is left in each case adjacent to the sample (1) that is currently in the sample illumination position (5),
b. focusing a light stripe (11) using an illumination objective (10),
c. deflecting the light stripe (11), after the latter has passed through the illumination objective (10), using the deflection means (6) in a manner such that the light stripe (11) propagates at an angle of more than 10 degrees or at a right angle with respect to the optical axis of the illumination objective (10) and has a focus in the sample illumination position (5),
d. successively positioning the samples (1), held using the sample holder (2), in the sample illumination position (5) and detecting the detection light emerging from the sample (1) that is respectively located in the sample illumination position (5), wherein
e. the sample holder (2), in which the samples (1) are held in at least one straight row, is displaced in a step-wise manner in the direction of the longitudinal extent of the subholder (3) in order to bring the individual samples (1) to be examined into the sample illumination position (5) one after the other, or
f. the sample holder is rotated in order to position in each case the sample that is to be examined next in the illumination position, wherein the samples (1) are held using the sample holder (2) in a curved or in an annular row.

2. Method according to Claim 1, **characterized in that**
a. the sample holder (2) has a plurality of subholders (3) with which in each case at least one sample (1) is held, and/or **in that**
b. the sample holder (2) has a plurality of strand-shaped subholders (3) that are aligned in a common plane and/or parallel to one another, and/or **in that**
c. the sample holder (2) has a plurality of cuboid subholders (3) with which in each case at least one of the samples (1) is held, and/or **in that**
d. the sample holder (2) has subholders (3), which are formed like shells and in which in each case at least one sample (1) is arranged, and/or **in that**
e. the sample holder (2) has a tube in which at least one of the samples (1) is held or in which a plurality of the samples (1) are arranged or situated in one row, and/or **in that**
f. the sample illumination position (5) is arranged outside the illumination objective (10) but in extension of the optical axis of the illumination objective (10).

3. Method according to Claim 2a to 2f, **characterized in that** at least one subholder (3) has an embedding medium or agarose or a gel-like, transparent medium in which the sample (1), which is held by the subholder (3) is embedded or in which the samples (1), which are held by the subholder (3) are embedded.

4. Method according to one of Claims 1 to 3, **characterized in that**
a. the samples (1) that have already been examined and already removed from the sample illumination position (5) are taken out of the sample holder (2), or **in that**
b. the samples (1) that have already been examined and already removed from the sample illumination position (5) are taken out of the sample holder (2) and further samples (1) to be examined are transferred to the sample holder (2) or to positions of the sample holder (2) that have become free.

5. Method according to one of Claims 1 to 4, **characterized in that**
a. the sample holder (2) is rotated in order to position in each case the sample (1) that is to be examined next in the illumination position (5), and/or in that
b. the sample holder (2) is rotated about the optical axis of the illumination objective (10) or about an axis that is parallel to the optical axis of the illumination objective (10) in order to position in each case the sample (1) that is to be examined next in the illumination position (5), and/or **in that**
c. the sample holder (2) is displaced linearly relative to the illumination position (5) in at least one direction in order to position in each case the sample (1) that is to be examined next in the illumination position (5), and/or **in that**
d. a displacement apparatus is present, with which the sample holder (2) is displaceable in two different directions or in two directions that are orthogonal to each other, and/or **in that**
e. a displacement apparatus is present, with which the sample holder (2) is displaceable in three different directions or in three directions that are orthogonal to one another.

6. Method according to one of Claims 1 to 5, **characterized in that**
a. the deflection means (6) and the sample (1) located in the illumination position (5) are arranged in a common plane, wherein the deflection means (6) within this plane surrounds the sample (1) located in the illumination position (5) merely partially or merely on one side or on two opposite sides, and/or **in that**
b. at least one region within a plane in which the sample illumination position (5) and the deflection means (6) are located remains free, and through which region the samples (1) can be brought into the sample illumination position (5) and removed therefrom.

7. Method according to one of Claims 1 to 6, **characterized in that** the type of the respectively used sample holder (2) is identified automatically and/or in a manner controlled by software and **in that** the successive positioning of the samples (1) in the illumination position (5) takes place with consideration of the identified type and/or using a position change routine that is associated with the identified type or is stored in a software memory.

8. Method according to one of Claims 1 to 7, **characterized in that** the samples (1) to be examined are arranged automatically in the sample holder (2) and/or in a subholder (3) of the sample holder (2).

9. Method according to one of Claims 1 to 8, **characterized in that** the light stripe (11) is a quasi-light stripe consisting of a light beam that is continuously moved back and forth in a light stripe plane.

10. Method according to one of Claims 1 to 9, **characterized in that** the light stripe (11) is coupled into the illumination objective (10) in a manner such that it extends eccentrically through the illumination objective (10).

11. Method according to one of Claims 1 to 10, **characterized in that** the detection light emerging from the sample (1) likewise passes through the illumination objective (10) and/or is collimated using the illumination objective (10).

12. Method according to one of Claims 1 to 11, **characterized in that** the detection light emerging from the sample (1) passes through a detection objective (8) and/or is collimated using a detection objective (8).

13. Method according to Claim 12, **characterized in that** the optical axis of the illumination objective (10) and the optical axis of the detection objective (8) are aligned such that they are parallel and/or collinear to one another.

14. Method according to one of Claims 1 to 13, **characterized in that**
a. the illumination objective (10) and the deflection apparatus (6) are arranged to be movable relative to one another, and/or **in that**
b. the deflection apparatus (6) is movably attached to the illumination objective (10), and/or **in that**
c. the deflection apparatus (6) is movably attached to the detection objective (8).

15. Microscope, which is configured for generating a light stripe (11), having an illumination objective (10) for focusing a light stripe (11) and having a deflection means (6) for deflecting the light stripe (11) passing through the illumination objective at an angle that differs from 0 degrees or at an angle of greater than 10 degrees or at a right angle with respect to the optical axis of the illumination objective (10), and having a sample holder (2) having at least one strand-shaped subholder (3), with which at least one row of samples (1) is able to be held in at least one straight, curved or annular row, wherein the sample holder (2) is arranged to be movable relative to a sample illumination position (5) by a motor and/or automatically in a manner such that, successively, in each case at least one of the samples (1) is positionable in the sample illumination position (5), wherein in each case a free space for the deflection means (6) is left in each case adjacent to the sample (1) that is currently in the sample illumination position (5), wherein the optical apparatus is embodied to perform a method according to one of Claims 1 to 14.

## Revendications

1. Procédé d'examen au microscope d'une pluralité d'échantillons, **caractérisé par** les étapes suivantes :
a. mise en place des échantillons (1) dans un porte-échantillons (2) qui comporte au moins un sous-porte-échantillons en forme de cordon au moyen duquel est maintenue au moins une rangée d'échantillons (1), le porte-échantillons (2) étant disposé de manière à pouvoir être déplacé par un moteur et/ou automatiquement par rapport à une position d'éclairement d'échantillon (5) de telle façon qu'au moins l'un des échantillons (1) peut respectivement être positionné successivement dans la position d'éclairement d'échantillon (5) en laissant un espace libre respectif pour un moyen de déviation (6) à proximité de l'échantillon (1) qui se trouve à ce moment dans la position d'éclairement d'échantillon (5),
b. focalisation d'une bande lumineuse (11) au moyen d'un objectif d'éclairement (10),
c. déviation de la bande lumineuse (11), après qu'elle a traversé l'objectif d'éclairement (10), à l'aide du moyen de déviation (6) de telle façon que la bande lumineuse (11) se propage selon un angle différent de zéro degré ou selon un angle supérieur à 10 degrés ou à angle droit par rapport à l'axe optique de l'objectif d'éclairement (10) et présente un foyer dans la position d'éclairement d'échantillon (5),
d. positionnement successif des échantillons (1) maintenus par le porte-échantillons (2) dans la position d'éclairement d'échantillon (5) et détection de la lumière de détection provenant de l'échantillon (1) se trouvant respectivement dans la position d'éclairement d'échantillon (5), dans lequel
e. le porte-échantillons (2), dans lequel les échantillons (1) sont maintenus en au moins une rangée droite, est déplacé pas à pas dans la direction d'extension longitudinale du sous-porte-échantillons (3) afin d'amener successivement les échantillons individuels (1) à examiner dans la position d'éclairement d'échantillon (5), ou
f. le porte-échantillons est mis en rotation pour positionner respectivement l'échantillon suivant à examiner dans la position d'éclairement, les échantillons (1) étant maintenus par le porte-échantillons (2) en une rangée incurvée ou annulaire.

2. Procédé selon la revendication 1, **caractérisé en ce que**
a. le porte-échantillons (2) comporte une pluralité de sous-porte-échantillons (3), au moyen desquels au moins un échantillon (1) est respectivement maintenu et/ou **en ce que**
b. le porte-échantillons (2) comporte une pluralité de sous-porte-échantillons (3) en forme de cordons qui sont alignés dans un plan commun et/ou parallèles les uns aux autres et/ou **en ce que**
c. le porte-échantillons (2) comporte une pluralité de sous-porte-échantillons (3) cubiques, au moyen desquels au moins l'un des échantillons (1) est respectivement maintenu et/ou **en ce que**
d. le porte-échantillons (2) comporte des sous-porte-échantillons (3) en forme de coquilles, dans lesquels est respectivement disposé au moins un échantillon (1) et/ou en ce que
e. le porte-échantillons (2) comporte un tube dans lequel au moins l'un des échantillons (1) est maintenu ou dans lequel plusieurs des échantillons (1) sont disposés ou alignés et/ou **en ce que**
f. la position d'éclairement de l'échantillon (5) est disposée à l'extérieur de l'objectif d'éclairement (10) mais dans le prolongement de l'axe optique de l'objectif d'éclairement (10).

3. Procédé selon la revendication 2a à 2f, **caractérisé en ce qu'**au moins un sous-porte-échantillons (3) comporte un milieu d'enrobage ou de l'agarose ou un milieu transparent de type gel, dans lequel l'échantillon (1) maintenu par le sous-porte-échantillons (3) est enrobé ou les échantillons (1) maintenus par le sous-porte-échantillons (3) sont enrobés.

4. Procédé selon l'une quelconque des revendications 1 à 3, **caractérisé en ce que**
a. les échantillons (1) qui ont déjà été examinés et qui ont déjà été retirés de la position d'éclairement d'échantillon (5) sont retirés du porte-échantillons (2) ou **en ce que**
b. les échantillons (1) qui ont déjà été examinés et qui ont déjà été retirés de la position d'éclairement d'échantillon (5) sont retirés du porte-échantillons (2) et d'autres échantillons (1) à examiner sont transférés dans le porte-échantillons (2) ou dans des positions du porte-échantillons (2) qui sont devenues libres.

5. Procédé selon l'une quelconque des revendications 1 à 4, **caractérisé en ce que**
a. le porte-échantillons (2) est mis en rotation pour positionner respectivement l'échantillon suivant (1) à examiner dans la position d'éclairement (5) et/ou **en ce que**
b. le porte-échantillons (2) est mis en rotation autour de l'axe optique de l'objectif d'éclairement (10) ou autour d'un axe parallèle à l'axe optique de l'objectif d'éclairement (10) pour positionner respectivement l'échantillon (1) suivant à examiner dans la position d'éclairement (5) et/ou **en ce que**
c. le porte-échantillons (2) est déplacé linéairement par rapport à la position d'éclairement (5) dans au moins une direction afin de positionner respectivement l'échantillon (1) suivant à examiner dans la position d'éclairement (5) et/ou **en ce que**
d. il est prévu un dispositif de déplacement au moyen duquel le porte-échantillons (2) peut être déplacé dans deux directions différentes ou dans deux directions mutuellement orthogonales et/ou **en ce que**
e. il est prévu un dispositif de déplacement au moyen duquel le porte-échantillons (2) peut être déplacé dans trois directions différentes ou dans trois directions mutuellement orthogonales.

6. Procédé selon l'une quelconque des revendications 1 à 5, **caractérisé en ce que**
a. le moyen de déviation (6) et l'échantillon (1) se trouvant dans la position d'éclairement (5) sont disposés dans un plan commun, le moyen de déviation (6), à l'intérieur de ce plan, n'entourant l'échantillon (1) se trouvant dans la position d'éclairement (5) que de manière incomplète ou seulement sur un côté ou sur deux côtés opposés, et/ou **en ce que**
b. au moins une zone située à l'intérieur d'un plan dans lequel se trouvent la position d'éclairement d'échantillon (5) et le moyen de déviation (6) reste libre, zone à travers laquelle des échantillons (1) peuvent être amenés dans la position d'éclairement d'échantillon (5) et retirés de celle-ci.

7. Procédé selon l'une quelconque des revendications 1 à 6, **caractérisé en ce que** le type de porte-échantillons (2) respectivement utilisé est détecté automatiquement et/ou par commande logicielle, et **en ce que** le positionnement successif des échantillons (1) dans la position d'éclairement (5) s'effectue en tenant compte du type détecté et/ou en utilisant une routine de changement de position associée au type détecté ou stockée dans une mémoire de logiciels.

8. Procédé selon l'une quelconque des revendications 1 à 7, **caractérisé en ce que** les échantillons (1) à examiner sont disposés automatiquement dans le porte-échantillons (2) et/ou dans un sous-porte-échantillons (3) du porte-échantillons (2).

9. Procédé selon l'une quelconque des revendications 1 à 8, **caractérisé en ce que** la bande lumineuse (11) est une quasi-bande lumineuse constituée d'un faisceau lumineux effectuant un mouvement de va et vient continu dans un plan de la bande lumineuse.

10. Procédé selon l'une quelconque des revendications 1 à 9, **caractérisé en ce que** la bande lumineuse (11) est injectée dans l'objectif d'éclairement (10) de telle façon qu'elle s'étend de manière décentrée à travers l'objectif d'éclairement (10).

11. Procédé selon l'une quelconque des revendications 1 à 10, **caractérisé en ce que** la lumière de détection provenant de l'échantillon (1) passe également à travers l'objectif d'éclairement (10) et/ou est collimatée au moyen de l'objectif d'éclairement (10).

12. Procédé selon l'une quelconque des revendications 1 à 11, **caractérisé en ce que** la lumière de détection provenant de l'échantillon (1) passe à travers un objectif de détection (8) et/ou est collimatée au moyen d'un objectif de détection (8).

13. Procédé selon la revendication 12, **caractérisé en ce que** l'axe optique de l'objectif d'éclairement (10) et l'axe optique de l'objectif de détection (8) sont alignés parallèlement et/ou colinéairement l'un à l'autre.

14. Procédé selon l'une quelconque des revendications 1 à 13, **caractérisé en ce que**
a. l'objectif d'éclairement (10) et le dispositif de déviation (6) sont agencés pour être mobiles l'un par rapport à l'autre et/ou **en ce que**
b. le dispositif de déviation (6) est fixé de manière mobile à l'objectif d'éclairement (10) et/ou **en ce que**
c. le dispositif de déviation (6) est fixé de manière mobile à l'objectif de détection (8).

15. Microscope conçu pour générer une bande lumineuse (11),
comprenant un objectif d'éclairement (10) pour focaliser une bande lumineuse (11) et comprenant un moyen de déviation (6) pour dévier la bande lumineuse (11) passant à travers l'objectif d'éclairement selon un angle différent de zéro degré ou selon un angle supérieur à 10 degrés ou à angle droit par rapport à l'axe optique de l'objectif d'éclairement (10), et comprenant un porte-échantillons (2) qui comporte au moins un sous-porte-échantillons (3) en forme de cordon au moyen duquel au moins une rangée d'échantillons (1) peut être maintenue en au moins une rangée droite, incurvée ou annulaire, dans lequel le porte-échantillons (2) est conçu pour être déplacé par un moteur et/ou automatiquement par rapport à une position d'éclairement d'échantillon (5) de telle façon qu'au moins l'un des échantillons (1) peut respectivement être positionné successivement dans la position d'éclairement d'échantillon (5) en laissant un espace libre respectif pour le moyen de déviation (6) à proximité de l'échantillon (1) qui se trouve à ce moment dans la position d'éclairement d'échantillon (5), dans lequel le dispositif optique est conçu pour mettre en œuvre un procédé selon l'une quelconque des revendications 1 à 14.
